# EUROPÄISCHE PATENTANMELDUNG

(11) **EP 1 386 659 A1**
(43) Veröffentlichungstag der Anmeldung: **04.02.2004**
(21) Anmeldenummer: 03017328.0
(22) Anmeldetag: 31.07.2003
(51) Int. Cl.: B01J 19/18

(54) **Polymerisationsreaktor**

(30) Priorität: 02.08.2002 DE 10235383
(71) Anmelder: Zentes Unitex GmbH, 63456 Hanau (DE)
(72) Erfinder: Finkeldei, Ferdinand, 60388 Frankfurt am Main (DE)
(74) Vertreter: Wolf, Günter, Dipl.-Ing.

(57) **Zusammenfassung**

Die Erfindung betrifft einen Polymerisationsreaktor, bestehend aus einem mit seiner Längs- achse horizontal orientierten, außenbeheizbaren Behälter (1) mit Zu- und Ablaufanschlüssen (2,3) für das zu polymerisierende Produkt und aus einer drehbaren Welle (4), an der zum Umwälzen und zum Transport des Produktes durch den oberhalb der Welle (4) ablaufseitig mit Absauganschluß (1') versehenen Behälter (1) eine Vielzahl von Ringscheiben (5) angeordnet ist, die in durch unterhalb der Welle (4) angeordnete, Durchströmöffnungen (7) begrenzende Trennwände (6) kommunizierend in Verbindung stehende Kammern (8) eingreifen, wobei die oberen Ränder der Trennwände (6) zum Teil mindestens im oberen Quadranten der Ringscheiben (5) schräg ansteigend zugeschnitten sind, in dem sich die drehenden Ringscheiben (5) in einer Aufwärtsdrehung befinden,
Nach der Erfindung ist ein solcher Reaktor derart ausgestaltet, daß die oberen Ränder (R) der Trennwände (6) in einem ersten Abschnitt (NA) der Reaktionsstrecke (RS) in Durchströmrichtung und ausgehend von einer ersten, bis oder angenähert bis zur Welle (4) reichenden Trennwand (6') mit abnehmender Höhe (H) bemessen sind und damit eine erste, in Durchströmrichtung fallende Kaskade (I) bilden, an die sich die Trennwände (6") in einem zweiten, in einem Ablaufraum (10) endenden Abschnitt (HA) anschließen, deren Höhen (H') bis auf im wesentlichen halbe Höhe der ersten Trennwand (6') der ersten Kaskade (I) zunehmend höher werdend bemessen sind und damit eine zweite, ansteigende Kaskade (II) bilden. Den im Tiefstbereich der Trennwände (6) angeordneten Durchströmöffnungen (7) sind als alleinige Verbindung zwischen den Kammern (8) der ersten Kaskade (I) in die jeweilige Vorkammer geneigt angestellt ori entierte, Produktanteile aus jeweils einer Kammer in die davor befindliche Kammer rückführende Strömungsführungen (9) und den Durchströmöffnungen (7) in der zweiten Kaskade (II) in die jeweilige Folgekammer geneigt angestellt orientierte, Produktanteile in die jeweilige Folgekammer leitende Strömungsführungen (9') zugeordnet.

## Beschreibung

Die Erfindung betrifft einen sogeannten Polymerisationsreaktor gemäß Oberbegriff des Patentanspruches 1.

Bezüglich dessen, was mit derartigen Reaktoren grundsätzlich bewirkt wird und wie dies im Prinzip vor sich geht, wird auf die DE 100 41 741 C1 und die DE 100 63 800 C1 verwiesen. Bei diesen Reaktoren handelt es sich jedoch um chargenweise beschickbare, mit ihrer Achse vertikal orientierte Apparate bzw. Autoklaven besonderer Bauart.
Um derartige Polymerisationsprozesse rationeller durchführen zu können, stehen seit langem auch kontinuierlich arbeitende Polymerisationsreaktoren der eingangs genannten Art zur Verfügung, von denen hier ausgegangen ist. Diese Reaktoren sind bezüglich ihres Bau-und Funktionsprinzips, soweit bekannt, im Wesentlichen unverändert geblieben, obgleich diese erkennbare Nachteile aufweisen, die sich wie folgt darstellen und erklärbar sind:
Bei den im Oberbegriff des Anspruches 1 vorerwähnten Durchströmöffnungen im bodennahen Bereich der Trennwände handelt es sich um relativ querschnittsgroße und zur Auslaufseite hin zudem größer werdende Kreissegmentöffnungen, was zur Folge hat, daß noch niedrigviskose Produktanteile in den produktbezogen auslaufseitigen höherviskosen Bereich der Reaktionsstrecke gelangen, was wiederum zur Folge hat, daß auch noch in diesem Bereich eine Entgasung bzw. Verdampfung erfolgt, die sich in einer brodelnden Produktoberfläche äußert und mit einer entsprechenden Produktspritzerbildung verbunden ist. Diese Produktspritzer schlagen sich im oberen Bereich der auslaufseitigen Reaktorwände, insbesondere der Behälterrückwand nieder, wo sie letztlich aufgrund der dort herrschenden Temperaturen verkohlen und im Laufe der Zeit zu massiven Verkohlungsansätzen führen, die zudem aufgrund eintretender Temperaturspannungen abplatzen und in das auslaufende Endpolymerisat gelangen. Dies hat zur Folge, daß zum Einen zeit-und kostenaufwendig der kontinuierliche Polymerisationsprozeß von Zeit zu Zeit unterbrochen und die Kohleansätze entfernt werden müssen, und daß zum Anderen das auslaufende, hochviskose Endpolymerisat zur Abtrennung der Kohlepartikel gefiltert werden muß, da etwa enthaltene Kohlepartikel die Weiterverarbeitung des Polymerisates beeinträchtigen würden und deshalb nicht zugelassen werden dürfen.
Ferner ist zwar durch die Anordnung der Trennwände in der Reaktionsstrecke im Reaktorbehälter zwar für deren Aufgliederung und damit für gewisse Verweilzeiten des zu polymerisierenden Produktes in den Einzelkammern gesorgt, da aber der Durchfluß des Produktes im Wesentlichen durch die vorerwähnten, relativ querschnittsgroßen Durchströmöffnungen im Bodenbereich der Trennwände erfolgt und bis zu einem gewissen Grade auch über die Oberkanten der Trennwände hinweg, ergeben sich beträchtlich ungleichmäßige Verweilzeiten für die die Reaktionsstrecke, d.h. für die die Einzelkammern passierende Produktmasse, und dies in Verbindung mit dem vorerwähnten Nachteil gewissermaßen des Durchschießens noch niedrigviskoser Produktanteile bis in den Auslaufbereich der Reaktionsstrecke mit den dazu erläuterten nachteiligen Folgen.

Der Erfindung liegt demgemäß, ausgehend von einem Polymerisationsreaktor der eingangs genannten Art, die Aufgabe zugrunde, diesen dahingehend umzugestalten und zu verbessern, daß eine weitestgehende Vergleichmäßigung der Masseverweilzeiten erreichbar ist und Verkohlungsansätze zumindest weitestgehend vermeidbar sind.

Diese Aufgabe ist mit einem Polymerisationsreaktor der eingangs genannten Art nach der Erfindung durch durch die im Kennzeichen des Patentanspruches 1 angeführten Merkmale gelöst.

Durch diese erfindungsgemäße Ausbildung und Anordnung der Trennwände liegen in der Reaktionsstrecke gewissermaßen zwei zu deren etwa mittleren Bereich hin abfallende Kammerkaskaden vor, wobei, durch die speziellen, den Durchströmöffnungen zugeordneten Strömungsführungen ein gewisser Rückpumpeffekt (wird im Einzelnen noch näher erläuterrt) für die Produktmasse erzielt wird, und zwar im ersten Teil der Reaktionsstrecke, in Durchlaufrichtung gesehen, in die jeweils davor befindliche Kammer und im zweiten Teil der Reaktionsstrecke, ebenfalls in Durchlaufrichtung gesehen, in die jeweilige Folgekammer. Der Weitertransport der Masse in Durchlaufrichtung des ersten Teiles der Reaktionsstrecke erfolgt also dort weniger durch die dort in den Trennwänden vorhandenen Durchströmöffnungen als vielmehr durch Überlauf an den oberen Rändern der Trennwände. Im zweiten Teil der Reaktionsstrecke, wo also das Produkt zunehmend höherviskos wird, vollzieht sich der Transport zum Auslaufraum im Wesentlichen durch die Durchströmöffnungen, während eine gewisse Rückströmung über die zweite Kaskade der Reaktionsstrecke wieder zum mittleren Bereich der Reaktionsstrecke erfolgt. Durch den vorerwähnten und noch näher zu erläuternden Pumpeffekt, der sich durch die drehenden und auch beim erfindungsgemäßen Reaktor beibehaltenen Ringscheiben ergibt, bleiben die in den Kammern befindlichen Produktmassen sich nicht selbst überlassen, sondern es wird von Kammer zu Kammer eine gewisse Masserückführung bewirkt und damit eine gezieltere Einstellung der Verweilzeit, was letztlich bezogen auf die die Reaktionsstrecke passierende Gesamtmasse zu homogeneren Polymerisationsgraden im jeweiligen Bereich der Reaktionsstrecke führt, d.h., die Polymerisationsgradzunahme über die Reaktionsstrecke vollzieht sich stetiger und insbesondere kommt es nicht mehr dazu, daß noch niedrigviskose bzw. nur anpolymerisierte Masseteile in den Auslaufbereich gelangen und dort zu den vorerläuterten, nachteiligen Effekten führen. Bezgl. dieser Erläuterung sei darauf hingewiesen, daß die tasächlichen Strömungsverhältnisse noch komplexer sind als hier beschrieben.
Abgesehen davon hat sich gezeigt, daß durch die erfindungsgemäß gezieltere Verweilzeitführung bei Reaktoren der erfindungsgemäßer Art, verglichen mit Reaktoren bekannter Art und vergleichbarer Größe, die Durchsatzleistung wesentlich erhöht werden kann, bzw. die gleiche Durchsatzleistung mit einem wesentlich kleiner bauenden Reaktor erzielbar ist.

Der erfindungsgemäße Polymerisationsreaktor und dessen vorteilhafte Weiterbildungen werden nachfolgend anhand der zeichnerischen Darstellung näher erläutert.
Es zeigt schematisch
- Fig. 1: einenLängsschnitt durch den Polymerisationsreaktor;
- Fig.2: eine kombinierte Schemaskizze aus einem Längsschnitt mit mehreren Querschnitten durch den Reaktor;
- Fig.3: vergrößert eine Darstellung der Zuordnung der Strömungsführungen zu den Öffnungen im Bodenbereich der Trennwände im ersten Teil der Reaktionsstrecke;
- Fig.3A: eine der Fig.3 entsprechende Darstellung bei Anordnung von bspw. zwei in eine Kammer eingreifenden Ringscheiben;
- Fig.4: eine der Fig.3 entsprechende Darstellung aber im zweiten Teil der Reaktionsstrecke;
- Fig.5: zum Vergleich einen Längsschnitt durch einen Reaktor bekannter und bislang benutzter Art und
- Fig.6: ebenfalls zum Vergleich Ansichten von Trennwänden im Reaktor gemäß Fig.5

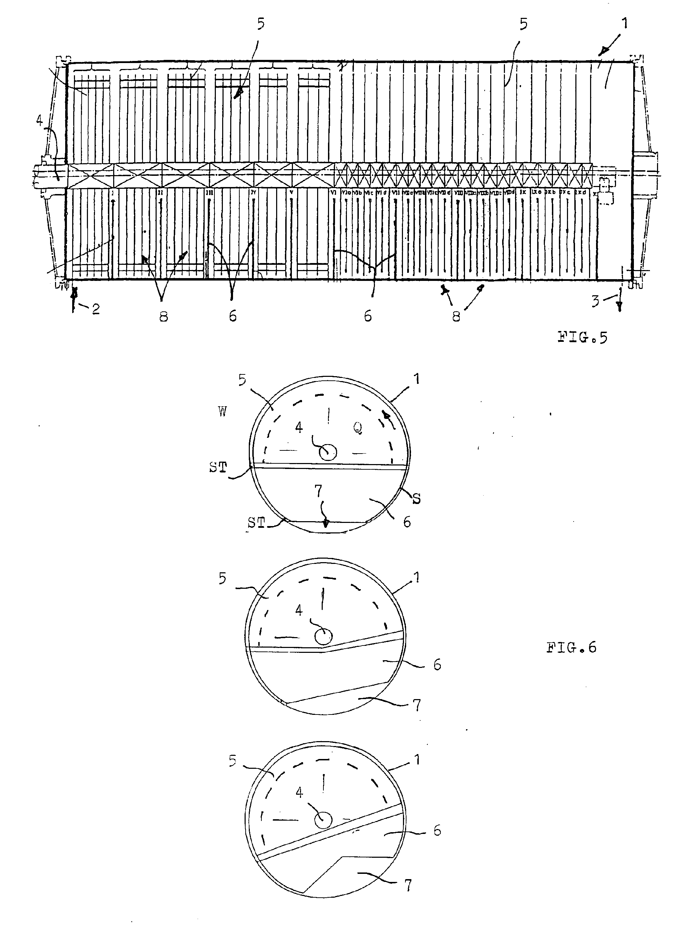

Der Polymerisationsreaktor besteht unter Verweis auf Vergleichsfiguren 5,6 erläuterungsbedürftig nach wie vor aus einem mit seiner Längsachse horizontal orientierten, außenbeheizbaren Behälter 1 mit Zu- und Ablaufanschlüssen 2,3 für das zu polymerisierende Produkt und aus einer drehbaren Welle 4, an der zum Umwälzen und zum Transport des Produktes durch den oberhalb der Welle 1 ablaufseitig mit Absauganschluß 1' versehenen Behälter 1 eine Vielzahl von Ringscheiben 5 angeordnet ist. Diese Ringscheiben 5 greifen in die durch unterhalb der Welle 4 angeordnete Trennwände 6 definierte und im Bodenbereich kommunizierend in Verbindung stehende Kammern 8 und damit in das zu polymerisierende Produkt ein. Die oberen Ränder der Trennwände 6 sind zum Teil mindestens im oberen Quadranten Q der Ringscheiben 5 schräg ansteigend zugeschnitten (siehe Fig.6), in dem sich im Betrieb die dort passierenden Bereiche der drehenden Ringscheiben 5 in einer Aufwärtsdrehung (siehe Pfeil P ebenfalls in Fig.6) befinden.
Bezgl. der Konfiguration der auf der Welle 4 mit Abstand zueinander angeordneten Ringscheiben 5 wird auf die Darstellung in Fig.5,6 verwiesen, die als Ganzes, mit der etwas exzentrisch im Behälter 1 angeordneten Welle 4 gedreht, insofern ein Rührwerk für das Produkt darstellen, als dieses an den Ringflächen filmartig anhaftet, mit hochgeschleppt wird und von diesen, noch ausreichend niedrigviskos, wieder nach unten zwecks Entgasung tröpfchen- bzw. schleierartig in die unten in den Kam mern 8 befindliche Produktmassen zurückfällt. Im produktbezogen höher viskosen Bereich sind hier nicht besonders dargestellte Abstreifer für die Ringscheiben 5 im Behälter 1 eingebaut.
Bezgl. der Konfiguration der Trennwände 6 und insbesondere bzgl. deren Durchströmöffnungen 7 wird auf die Vergleichsfigur 6 verwiesen, die deutlich macht, daß diese Öffnungen nicht nur relativ groß und zur Auslaufseite hin größer werdend bemessen sind, sondern daß diese Trennwände 6 zudem durch Stege ST mit der Behälterwand W Spalte S begrenzen, durch die natürlich auch ein gewisser Anteil der Produktmasse aus den Kammern in die jeweiligen Folgekammern gelangt, d.h., eine exakte Trennung bzw. nur durch Durchströmöffnungen definierte Verbindung zwischen den Kammern 8 liegt bei diesem bekannten Reaktor nicht vor, bei dem im übrigen jeweils mehrere Ringscheiben in einer Kammer umlaufen.

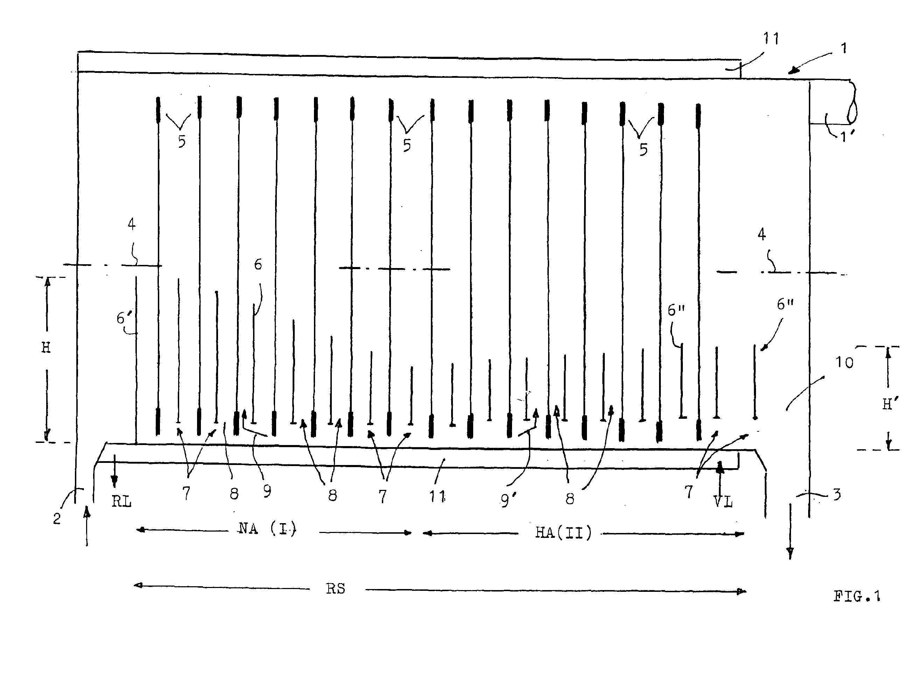

Für den erfindungsgemäßen Reaktor ist nun unter Verweis auf die Fig.1 bis 4 demgegenüber wesentlich, daß die oberen Ränder R der Trennwände 6 in einem ersten, produktbezogen niedrigviskosen Abschnitt NA der Reaktionsstrecke RS in Durchströmrichtung und ausgehend von einer ersten, bis oder angenähert bis zur Welle 4 reichenden Trennwand 6' mit abnehmender Höhe H bemessen sind, an die sich die Trennwände 6" in einem zweiten, produktbezogen höherviskosen, in einem Ablaufraum 10 endenden Abschnitt HA anschließen, deren Höhen H' bis auf im Wesentlichen halbe Höhe der ersten Trennwand 6' zunehmend höher werdend bemessen sind. Den im Tiefstbereich der Trennwände 6 angeordneten allein kommunizierende Verbindungen zwischen den Kammern 8 im ersten Abschnitt NA der Reaktionsstrecke RS darstellenden Durchströmöffnungen 7 sind jeweils gegen die Vorkammer angestellt geneigte, Produktanteile aus jeweils einer Kammer in die davor befindliche Kammer rückführende Strömungsführungen 9 zugeordnet und den Durchströmöffnungen 7 im zweiten Abschnitt HA bzw. der Kaskade II gegen die jeweilige Folgekammer geneigt angestellte, Produktanteile in die jeweilige Folgekammer leitende Strömungsführungen 9' zugeordnet.

Die Trennwände bilden also mit ihren Oberkanten zwei Kaskaden I und II, die von einem mittigen bzw. angenähert mittigen Bereich der Reaktionsstrecke RS ausgehend ansteigend sind, wobei die Steigung der ersten, zulaufseitigen Kaskade I größer ist als die der zweiten, abströmseitigen Kaskade II.

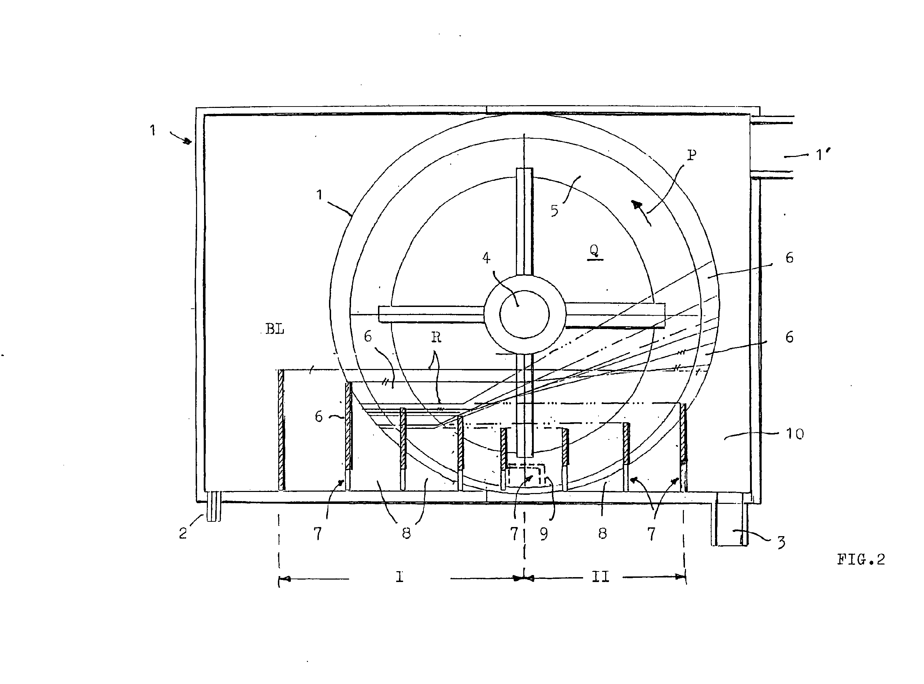

Fig.2 stellt, stark schematisiert und zusammengefaßt, sowohl einen Längsschnitt als auch einen Querschnitt durch den Reaktor dar, um den Zuschnitt der Trennwände 6 und deren Anordnung innerhalb der beiden Kaskaden I,II zu verdeutlichen, wobei die Bezugslinien BL und die oberen Ränder R der Trennwände 6 entsprechend markiert sind. Die schräg ansteigenden oberen Ränder R der Trennwände 6 befinden sich dabei auf der Seite, auf der die immer viskoser bezw. zähflüssiger werdenden Produktmassen in den Kammern 8 durch die Drehung der Ringscheiben 5 angehoben werden.

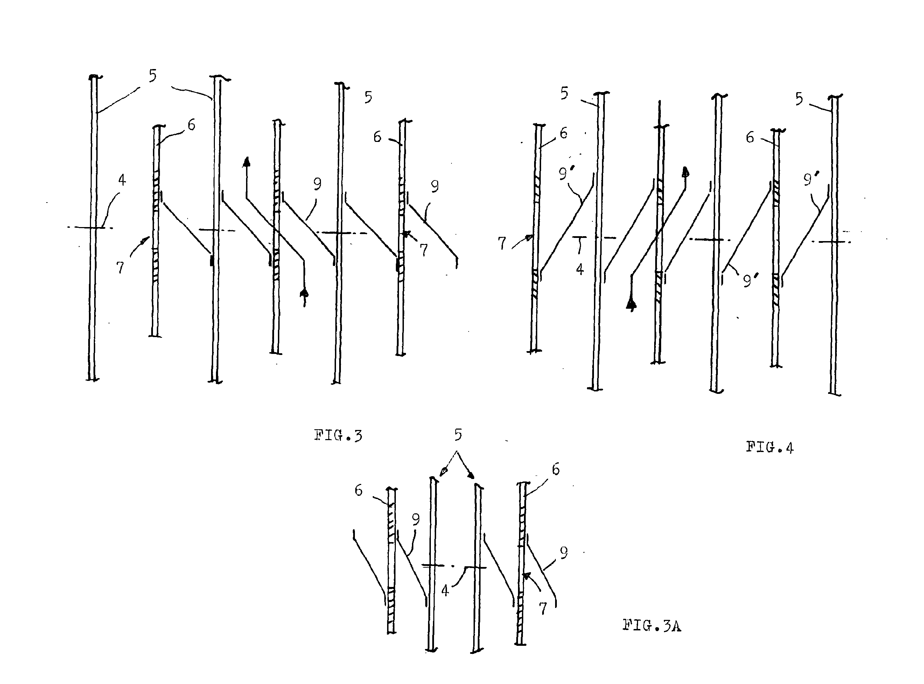

Bezüglich der Maßgaben zur Orientierung der Strömungsführungen 9 bzw.9', nämlich "geneigt angestellt zur Vorkammer bzw. zur Folgekammer" wird auf Fig.3,4 verwiesen, die dies schematisch für beide Kaskadenbereiche der Reaktionsstrecke RS verdeutlicht, d.h., die Schrägstellung der Strömungsführungen 9' im Bereich der zweiten Kaskade II ist entgegengesetzt zur Schrägstellung der Strömungsführungen 9 in der ersten durch die Trennwände 6 gebildeten Kaskade I. Diese Strömungsführungen 9, 9' sind vorzugsweise in Form kleiner Tunnel ausgebildet, was nicht besonders dargestellt ist, da ohne weiteres vorstellbar.
Da die durch die Produktmassen drehenden Ringscheiben 5 via Reibung die Masse mitschleppen, entsteht in der in der jeweiligen Kammer 8 befindlichen Masse ein entsprechender Schub, durch den die im Bereich der Ströungsführungen befindliche Masse in die Strömungsführungen 9,9' gedrückt und damit in die davor befindliche Kammer bzw. in die Folgekammer von unten her eingefördert wird. Durch diesen Pumpeffekt wird gleichzeitig die Masse in den Kammern 8 angehoben, der dabei nichts anderes übrigbleibt, als oben über die Trennwände überzulaufen, was sich über die ganze Kaskade in Durchlaufrichtung fortsetzt.
In der Folgekaskade II geschieht dieser Überlauf in entgegengesetzter Richtung, d.h., dort, im höher viskosen Bereich der Reaktionsstrecke RS erfolgt der Weitertransport zum Ablaufraum 10 hin durch die bodenseitigen Durchströmöffnungen 7 der dort befindlichen Trennwände, wobei aber am Ende der Kaskade II für einen Überlauf in die Auslaufraum 10 gesorgt ist.
Mit Rücksicht auf den zunehmenden Viskositätsgrad in dieser zweiten Kaskade können die Querschnitte der Durchströmöffnungen 7 in diesem zweiten Abschnitt HA der Reaktionsstrecke RS etwas größer bemessen sein als die der Durchströmöffnungen 7 im ersten Abschnitt NA.
Zur Erhöhung des Pumpeffektes und zur Erleichterung der Einleitung der dadurch abgezweigten Masse in die benachbarte Kammer kann ferner vorteilhaft vorgesehen werden, daß die den Durchströmöffnungen 7 in den Kammern 8 zugeordneten Strömungsführungen 9,9' parallel zueinander auf beiden Seiten der Öffnungen 7 angeordnet sind. Sofern in die Kammern 8 nicht nur eine Ringscheibe 5 sondern mehrere (siehe auch Vergleichsfigur 5 und Fig.3A) drehend eintauchen, so sind die Strömungsführungen 9,9', wie in Fig.3A dargestellt, den Durchströmöffnungen 7 und den Ringscheiben zugeordnet.

Um schließlich das auf gewünschten Polymerisationsgrad gebrachte Produkt in den Ablaufraum 10 gelangen bzw. überlaufen zu lassen, ist vorteilhaft mindestens die die letzte Kammer 8 vom Ablaufraum 10 trennende Trennwand 6" geringfügig unterhalb des Niveaus der höchst endenden Trennwand 6 ' ' ' in diesem Abschnitt HA endend ausgebildet und angeordnet.

Da aufgrund dieser Gestaltung praktisch kein niedrigviskoses bzw. nur schwach anpolymerisiertes Material in den Endbereich der Reaktionsstreckem RS gelangen kann, ist auch der einleitend vorerläuterte Spitzeffekt in diesem Bereich weitestgehend unterbunden, d.h., Anbackungen und Verkohlungen treten nicht mehr auf. Da ferner aufgrund der erläuterten speziellen Produktführung zur Erreichung des gewünschten Polymerisationsgrades eine wie bislang übliche Beheizung auch dieses hinsichtlich des Produktes temperaturhochsensiblen Bereiches entbehrlich ist, ist vorteilhaft die Außenbeheizung 11 des Behälters 1, ausgehend von dessen zulaufseitigem Ende E, lediglich bis zum Ansatz des Ablaufraumes 10 des Behälters 1 erstreckt, wie dies auch aus Fig.1 ersichtlich ist. In diesem Zusammenhang ist es aber auch möglich, die Außenbeheizung 11, wenn in diesem Endbereich vorhanden, für diesen Bereich steuerbar, d.h. auch abschaltbar auszubilden.

## Patentansprüche

1. Polymerisationsreaktor, bestehend aus einem mit seiner Längsachse horizontal orientierten, außenbeheizbaren Behälter (1) mit Zu- und Ablaufanschlüssen (2,3) für das zu polymerisierende Produkt und aus einer drehbaren Welle (4), an der zum Umwälzen und zum Transport des Produktes durch den oberhalb der Welle (4) ablaufseitig mit Absauganschluß (1') versehenen Behälter (1) eine Vielzahl von Ringscheiben (5) angeordnet ist, die in durch unterhalb der Welle (4) angeordnete, Durchströmöffnungen (7) begrenzende Trennwände (6) kommunizierend in Verbindung stehende Kammern (8) eingreifen, wobei die oberen Ränder der Trennwände (6) zum Teil mindestens im oberen Quadranten der Ringscheiben (5) schräg ansteigend zugeschnitten sind, in dem sich die drehenden Ringscheiben (5) in einer Aufwärtsdrehung befinden,
**dadurch gekennzeichnet,**
**daß** die oberen Ränder (R) der Trennwände (6) in einem ersten Abschnitt (NA) der Reaktionsstrecke (RS) in Durchströmrichtung und ausgehend von einer ersten, bis oder angenähert bis zur Welle (1) reichenden Trennwand (6') mit abnehmender Höhe (H) bemessen sind und damit eine erste, in Durchströmrichtung fallende Kaskade (I) bilden, an die sich die Trennwände (6") in einem zweiten, in einem Ablaufraum (10) endenden Abschnitt (HA) anschließen, deren Höhen (H') bis auf im wesentlichen halbe Höhe der ersten Trennwand (6') der ersten Kaskade (I) zunehmend höher werdend bemessen sind und damit eine zweite, ansteigende Kaskade (II) bilden und daß den im Tiefstbereich der Trennwände (6) angeordneten Durchströmöffnungen (7) als alleinige Verbindung zwischen den Kammern (8) der ersten Kaskade (I) in die jeweilige Vorkammer geneigt angestellt orientierte, Produktanteile aus jeweils einer Kammer in die davor befindliche Kammer rückführende Strömungsführungen (9) und den Durchströmöffnungen (7) in der zweiten Kaskade (II) in die jeweilige Folgekammer geneigt angestellt orientierte, Produktanteile in die jeweilige Folgekammer leitende Strömungsführungen (9') zugeordnet sind.

2. Reaktor nach Anspruch 1,
**dadurch gekennzeichnet,**
**daß** die Querschnitte der Durchströmöffnungen (7) in der zweiten Kaskade (II) größer bemessen sind als die der Durchströmöffnungen (7) in der ersten Kaskade (I).

3. Reaktor nach Anspruch 1 oder 2,
**dadurch gekennzeichnet,**
**daß** die den Durchströmöffnungen (7) in den Kammern (8) zugeordneten Strömungsführungen (9,9') parallel zueinander auf beiden Seiten der Durchströmöffnungen (7) angeordnet sind.

4. Reaktor nach einem der Ansprüche 1 bis 3,
**dadurch gekennzeichnet,**
**daß** die Strömungsführungen (9,9') tunnelartig ausgebildet sind.

5. Reaktor nach einem der Ansprüche 1 bis 4,
**dadurch gekennzeichnet,**
**daß** mindestens die vor dem Ablaufraum (10) angeordnete Trennwand (6") geringfügig unterhalb des Niveaus der höchst endenden Trennwände (6") in der zweiten Kaskade (II) endend ausgebildet und angeordnet sind.

6. Reaktor nach einem der Ansprüche 1 bis 5,
**dadurch gekennzeichnet,**
**daß** die Außenbeheizung (11) des Behälters (1), ausgehend von dessen zulaufseitigem Ende (E), lediglich bis zum Ansatz des Ablaufraumes (10) Behälters (1) erstreckt ist.

7. Reaktor nach einem der Ansprüche 1 bis 5,
**dadurch gekennzeichnet,**
**daß** die Außenbeheizung (11) des Behälters (1) in dessen auslaufseitigen Endbereich (EB) steuerbar ausgebildet ist.
